# FASCICULE DE BREVET EUROPEEN

(11) **EP 2 155 549 B1**
(45) Date de publication et mention de la délivrance du brevet: **29.09.2010**
(21) Numéro de dépôt: 08826123.5
(22) Date de dépôt: 13.06.2008
(51) Int. Cl.: B64C 1/22, B64D 9/00, B64F 1/32

(54) **DISPOSITIF DE CONVOYAGE DESTINE NOTAMMENT A DES BAGAGES DANS UNE SOUTE D'AERONEF**
FÖRDERVORRICHTUNG ZUR BEWEGUNG VOM INSBESONDERE GEPÄCK IN EINEM FRACHRAUM EINES FLUGZEUGES
CONVEYOR DEVICE INTENDED IN PARTICULAR FOR LUGGAGE IN AN AIRCRAFT HOLD

(30) Priorité: 15.06.2007 FR 0704292
(43) Date de publication de la demande: 24.02.2010
(73) Titulaire: AIRBUS OPERATIONS, 31060 Toulouse (FR)
(72) Inventeur: GUERING, Bernard, F-31850 Montrabe (FR)
(74) Mandataire: Hartmann, Jean-Luc
(86) Numéro de dépôt international: PCT/FR2008/000822
(87) Numéro de publication internationale: WO 2009/007549

(56) Documents cités:
- BE-A- 679 310
- US-A- 4 544 319
- US-A- 4 780 043

## Description

La présente invention concerne un dispositif de convoyage, destiné notamment à des bagages dans une soute d'un aéronef.

Un dispositif de convoyage dans une soute d'aéronef est connu de US-4544319 , qui montre toutes les caractéristiques du préambule de la revendication 1.

Dans un aéronef destiné au transport de passagers, les passagers emportent une partie de leurs bagages avec eux dans la cabine de l'aéronef tandis que les bagages les plus volumineux et les plus lourds voyagent en soute. Ces derniers bagages sont transportés jusqu'à l'aéronef à l'aide de convoyeurs ou sur des chariots tractés. Il existe des convoyeurs permettant de transporter les bagages jusqu'à la porte de la soute de l'aéronef. Le rangement à l'intérieur de la soute se fait le plus souvent manuellement. Un opérateur saisit le bagage arrivant dans la soute et va le loger à l'intérieur de celle-ci. Ces opérations pour placer les bagages dans la soute sont pénibles. La soute est un espace relativement exigu dans lequel il n'est pas possible la plupart du temps de tenir debout. En outre, certains bagages peuvent être lourds. Le plus difficile est d'aller placer les premiers bagages au fond de la soute lors du chargement des bagages ou bien, lors du déchargement des bagages, d'aller chercher les bagages se trouvant au fond de la soute pour les sortir.

Toutes ces difficultés à disposer les bagages dans la soute et à les en extraire rendent les temps de chargement et de déchargement des bagages des passagers relativement longs. Les passagers, après leur descente de l'aéronef, doivent alors attendre leurs bagages dans l'aérogare. De ce fait, de nombreux passagers préfèrent emporter tous leurs bagages en cabine, même certains relativement volumineux, plutôt que de les faire voyager en soute.

Pour inciter les passagers à faire voyager leurs bagages en soute, et libérer de l'espace en cabine, permettant ainsi d'augmenter le confort des passagers durant leur voyage et à l'embarquement/débarquement, il convient de limiter le temps d'attente pour la récupération des bagages ayant voyagé en soute.

La présente invention a alors pour but de fournir un dispositif permettant de faciliter la tâche des opérateurs chargés de placer des bagages dans une soute d'aéronef et de décharger cette soute.

Un autre but de l'invention est de fournir des moyens permettant de décharger plus rapidement la soute d'un aéronef pour limiter, voire supprimer, le temps d'attente des bagages lors de l'arrivée des voyageurs dans l'aérogare à leur arrivée.

Avantageusement, le système selon l'invention est un système modulaire pouvant s'adapter à une soute recevant à la fois des conteneurs et des bagages. De préférence, ce dispositif permettra d'adapter l'espace prévu pour les bagages dans la soute, en fonction notamment du nombre de conteneurs à transporter.

À cet effet, la présente invention, telle que définie par la revendication 1, propose un dispositif de convoyage pour objets, notamment des bagages, dans une soute d'aéronef destinée à recevoir à la fois des conteneurs et des bagages et munie d'un système de chargement de fret présentant des rouleaux définissant un plan de roulement sur lequel un conteneur peut se déplacer en faisant rouler lesdits rouleaux.

Selon la présente invention, ce dispositif comporte un ensemble de tapis roulants disposés longitudinalement dans la soute l'un à la suite de l'autre de manière à s'étendre sur une partie au moins de la longueur de la soute ; chaque tapis roulant comporte un brin supérieur destiné à recevoir un objet pour le déplacer ; chaque tapis est mobile entre une première position surélevée dans laquelle le brin supérieur dudit tapis se trouve au-dessus du plan de roulement défini par les rouleaux du système de chargement de fret et une seconde position dans laquelle le brin supérieur dudit tapis se trouve au-dessous dudit plan de roulement.

De cette manière, lorsque des conteneurs sont chargés ou déchargés, les tapis roulants sont abaissés pour laisser passer les conteneurs sans les gêner. Lorsque les conteneurs sont en place au fond de la soute, les bagages peuvent être chargés et déchargés. Les tapis roulants permettent d'entraîner les bagages depuis une zone à proximité d'une porte de chargement de la soute en direction du fond de la soute. Au fur et à mesure du chargement, des tapis roulants sont abaissés et leur entraînement stoppé. De même, lors du déchargement, des tapis passent progressivement en position surélevée et sont mis en marche pour permettre de convoyer les bagages jusqu'à proximité d'une porte de la soute.

Dans une forme de réalisation préférée, le dispositif de convoyage pour objets selon l'invention comporte deux ensembles de tapis roulants disposés longitudinalement dans la soute l'un à la suite de l'autre de manière à s'étendre sur une partie au moins de la longueur de la soute, les deux ensembles étant disposés parallèlement en vis-à-vis, en étant séparés l'un de l'autre par des rouleaux du système de chargement de fret. Cette variante est adaptée à la plupart des système de chargement de fret et permet en outre d'augmenter le flux de bagages transportés par le dispositif de convoyage selon l'invention.

Les tapis roulants d'un même ensemble sont avantageusement d'une même longueur et disposés selon un pas prédéterminé. Ce pas correspond de préférence au pas qui sépare deux conteneurs dans la soute. Ainsi, si on souhaite augmenter le nombre de conteneurs transportés dans la soute, on abaisse simplement un tapis roulant pour chaque ensemble de tapis roulants et un conteneur vient prendre place au-dessus du (des) tapis abaissé(s).

Pour assurer la surélévation des tapis roulants et leur abaissement, une forme de réalisation de la présente invention prévoit que chaque tapis roulant comporte un bande sans fin montée autour de deux rouleaux d'extrémité, que les deux rouleaux d'extrémité sont parallèles et montés sur des bras pivotants par rapport à la soute, chaque bras associé à un rouleau d'extrémité formant avec un bras de l'autre rouleau d'extrémité un parallélogramme.

Pour pouvoir coopérer avec un dispositif de chargement et de déchargement automatique de bagages hors de la soute, le dispositif de convoyage pour objets selon la présente invention est réalisé de telle manière qu'un tapis roulant disposé à une extrémité d'un ensemble de tapis roulants peut s'incliner par rapport au tapis roulant contigu.

La présente invention concerne également un dispositif de convoyage pour objets tel que décrit plus haut et qui comporte en outre un système de chargement de fret.

La présente invention a aussi pour objet un aéronef comportant une soute, **caractérisé en ce que** la soute est équipée d'un dispositif de convoyage pour objets tel que décrit plus haut. Dans un tel aéronef, la soute comporte de préférence au moins deux portes d'accès disposées chacune sensiblement à l'extrémité d'un ensemble de tapis roulants ; une première porte est de taille suffisante pour permettre l'introduction d'un conteneur de taille normalisée dans la soute, et une seconde porte, de taille réduite par rapport à la première porte, est placée sur la paroi de la soute opposée à la paroi sur laquelle se trouve la première porte. La première porte, même si elle est plus particulièrement destinée à l'entrée et la sortie de conteneurs peut également être utilisée pour le chargement et le déchargement de bagages.

Dans une variante préférée, facilitant le convoyage d'objets tels des bagages, entre les deux portes d'accès de la soute de l'aéronef, à l'extrémité d'au moins un ensemble de tapis roulants, la soute comporte un élément de convoyage permettant de réaliser un déplacement d'un objet dans deux directions perpendiculaires, une première direction correspondant à la direction de déplacement d'un objet se trouvant sur l'ensemble de tapis roulants et la seconde direction étant une direction perpendiculaire correspondant à une direction transversale par rapport à l'aéronef.

Des détails et avantages de la présente invention ressortiront mieux de la description qui suit, faite en référence aux dessins schématiques annexés sur lesquels:
La figure 1 représente une soute d'aéronef équipée d'un dispositif de convoyage selon la présente invention,
La figure 2 est une vue schématique de face d'une soute équipée d'un dispositif de convoyage selon la présente invention, la partie gauche de cette figure montrant partiellement un dispositif de convoyage selon la présente invention utilisé pour déplacer des bagages et la partie droite de cette figure montre un dispositif de convoyage similaire lors de la mise en place d'un conteneur,
La figure 3 est une vue schématique de côté un tapis d'un dispositif de convoyage selon la présente invention en position surélevée,
La figure 4 est une vue de face du tapis roulant de la figure 3,
La figure 5 représente schématiquement le tapis roulant de la figure 2 en position abaissée,
La figure 6 est une vue de face du tapis roulant de la figure 5,
La figure 7 est une vue illustrant le chargement et le déchargement de bagages par une première porte de la soute de l'aéronef, et
La figure 8 est une vue illustrant le chargement et le déchargement de bagages par une seconde porte de la soute de l'aéronef.

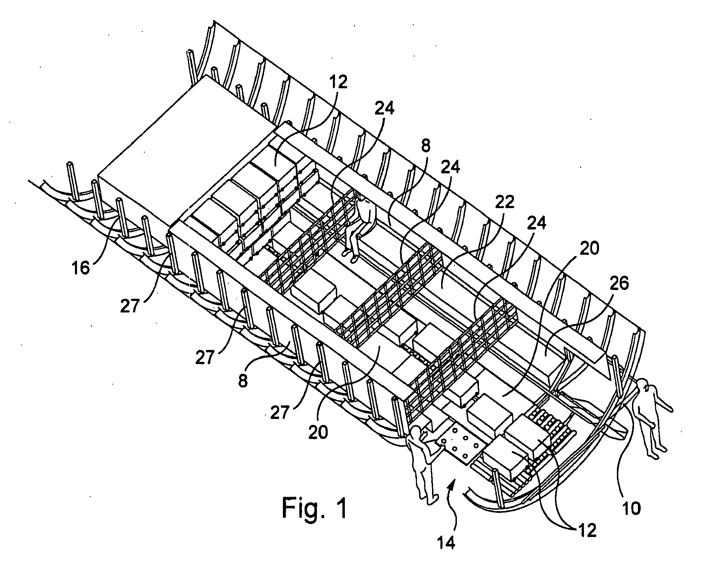

La description qui suit est faite en référence à un aéronef destiné notamment au transport de passagers. La figure 1 représente une soute d'un tel aéronef.

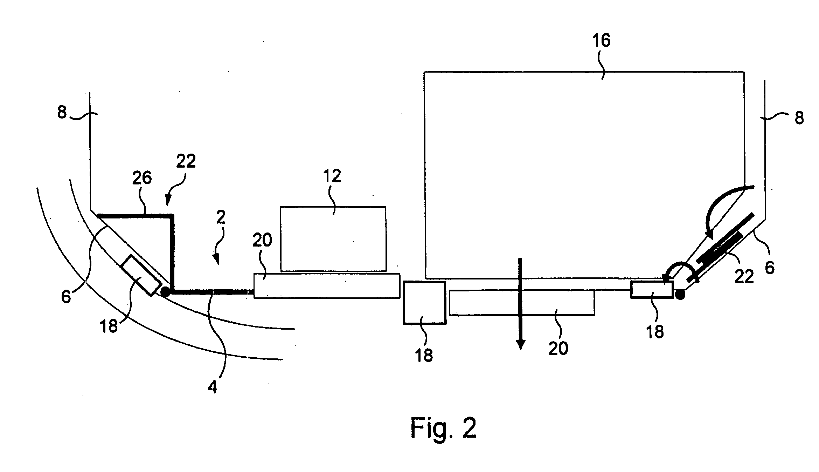

On reconnaît sur les figures 1 et 2 un plancher 2 de soute. Ce plancher est réalisé en trois parties : une partie centrale 4 sensiblement horizontale et deux parties latérales 6 relevées, inclinées par rapport à la partie centrale 4. Bien entendu, les références d'horizontalité et de verticalité dans la présente demande de brevet concernent l'aéronef décrit lorsque celui-ci est au sol.

La soute présente également des parois latérales 8 sensiblement verticales qui délimitent le volume de chargement de la soute. Le plafond de celle-ci n'est pas visible ici.

La soute représentée sur la figure 1 comporte comme accès, d'une part une porte à bagages 10 destinée notamment au chargement et déchargement de bagages 12 et d'autre part une porte à conteneurs 14. Cette dernière est de taille suffisante pour permettre par exemple le passage d'un conteneur 16 normalisé de type LD3.

La soute représentée sur la figure 1 est équipée d'un système de chargement de fret, connu également sous le nom de CLS (abréviations anglaises pour Cargo Loading System). Celui-ci est prévu pour le déplacement des conteneurs 16 dans la soute. Ces derniers sont chargés et déchargés par la porte à conteneurs 14. Le système de chargement de fret comporte notamment des rouleaux 18 sur lesquels viennent glisser les conteneurs 16 se déplaçant dans la soute. Les rouleaux 18 définissent un plan de roulement sur lequel se déplacent les conteneurs 16. Ces derniers sont introduits dans la soute par la porte à conteneurs 14 et poussés à l'intérieur de la soute. Le système de chargement de fret permet de facilement déplacer les conteneurs 16 vers le fond de la soute pour permettre l'introduction d'autres conteneurs 16. Des systèmes de verrouillage non représentés permettent de maintenir les conteneurs 16 au fond de la soute durant un vol. De tels systèmes de chargement et de verrouillage sont connus de l'homme du métier et ne sont pas décrits plus en détails ici.

Dans l'exemple de la figure 1, un conteneur 16 se trouve au fond de la soute et le reste de la soute est destiné à recevoir des bagages 12. Pour le chargement de la soute, les bagages 12 sont introduits par exemple dans la soute par la porte à bagages 10. Des moyens originaux sont alors prévus pour acheminer ces bagages 12 vers le fond de la soute.

Les moyens mis en oeuvre ici comportent deux ensembles identiques de tapis roulants 20. Les tapis roulants 20 d'un ensemble sont alignés l'un derrière l'autre dans le sens longitudinal de l'aéronef sur la partie centrale 4 du plancher 2 de la soute. Entre les deux ensembles de tapis roulants 20 se trouve une rangée de rouleaux 18 du système de chargement de fret.

Ces tapis roulants 20 permettent chacun de déplacer longitudinalement dans la soute de l'aéronef un (ou plusieurs) bagage 12 posé sur eux. Un ensemble de tapis roulants 20 permet ainsi de déplacer un bagage 12 depuis le premier tapis roulant situé au plus près de la porte à bagages 10 jusqu'au dernier tapis roulant situé à l'autre extrémité de l'ensemble de tapis roulants en passant d'un tapis roulant 20 à l'autre.

Il est ainsi prévu de poser les bagages 12 sur le premier tapis roulant de chacun des ensembles de tapis roulants 20. Ces bagages 12 sont alors acheminés jusqu'au fond de la soute. Un opérateur se trouvant au fond de la soute dispose alors les bagages qu'il reçoit pour former un mur de bagages, comme représenté sur la figure 1. On prévoit de préférence un opérateur par ensemble de tapis roulants 20.

Pour faciliter le travail des opérateurs réalisant le rangement des bagages au fond de la soute, il est prévu au niveau des parties latérales 6 inclinées du plancher 2 des bancs 22. Ces derniers sont de préférence pliables de manière à ne pas gêner le passage de conteneurs 16. Ces bancs 22 peuvent également être utilisés pour supporter des bagages 12. En effet, au lieu de faire reposer des bagages 12 sur les parties inclinées du plancher 2 de la soute, ces bagages sont posés sur les bancs 22 qui présentent de préférence une assise 26 sensiblement horizontale et parallèle à la partie centrale 4 du plancher 2 de la soute. De la sorte, l'empilement de bagages réalisé est plus stable.

Les tapis roulants 20 peuvent être commandés individuellement. Ainsi, sur la figure 1, le tapis roulant se trouvant le plus au fond de la soute de chaque ensemble de tapis roulants et sur lequel se trouve un mur de bagages 12 est de préférence arrêté. Des frottements entre lesdits tapis roulants et les bagages se trouvant au bas du mur de bagages sont ainsi évités.

Au fur et à mesure du chargement, les bagages forment des murs de bagages. Pour assurer ces bagages et éviter qu'ils ne tombent, il est prévu de tendre des filets 24 transversalement par rapport à la soute. Ces filets 24 sont se préférence enroulés sur des jambes 27 se trouvant au niveau des parois latérales 8. Ces jambes 27 relient le plancher d'une cabine se trouvant au-dessus de la soute à une structure primaire de l'aéronef. On reconnaît sur la figure 1 des tronçons d'éléments (appelés généralement "cadre" ou "couple") de cette structure primaire sur lesquels les jambes 27 viennent en appui.

Chaque filet 24 est de préférence disposé au niveau de deux jambes 27 correspondant à un même cadre de la structure primaire de l'aéronef. Un enrouleur est alors monté sur les deux jambes 27 correspondantes. Une fente réalisée dans la paroi latérale 8 correspondante face à une jambe 27 permet le passage du filet 24. Un revêtement non représenté est prévu autour de l'enrouleur pour réaliser l'étanchéité autour de celui-ci et assurer ainsi la continuité de la paroi latérale. Chaque enrouleur reçoit par exemple un demi filet 24. Ces demis filets sont alors tirés par les opérateurs depuis chaque enrouleur et se rejoignent au centre de la soute et sont accrochés l'un à l'autre à l'aide de crochets ou autres dispositifs de liaison.

La figure 2 est une vue de face schématique montrant sur une partie le convoyage d'un bagage 12 et sur l'autre partie le déplacement d'un conteneur 16, par exemple un conteneur normalisé de type LD3.

Sur la partie gauche de la figure 2, on reconnaît notamment un tapis roulant 20, des rouleaux 18 du système de chargement de fret, une partie de la structure de la soute avec son plancher ainsi qu'un banc 22 escamotable.

Le tapis roulant 20 est ici (sur la partie gauche de la figure 2) dans sa position active. Le brin supérieur du tapis se trouve au-dessus du plan au niveau duquel s'effectue le roulement d'un conteneur 16 : ce plan correspond au plan passant par les arêtes supérieures des rouleaux 18 ou bien encore au fond d'un conteneur 16 se déplaçant en roulant sur ces rouleaux 18 (cf. partie droite de la figure 2). Le tapis roulant 20 peut alors transporter un bagage 12 sans être gêné par le système de chargement de fret de la soute.

On remarque sur la partie gauche de la figure 2 que le banc 22 est dans sa position d'utilisation. Il présente ainsi une assise 26 sensiblement horizontale ou, exprimé différemment, sensiblement parallèle à la partie centrale 4 du plancher 2 de la soute.

Sur la partie droite de la figure 2, les tapis roulants 20 sont inactifs et les rouleaux 18 du système de chargement de fret sont utilisés pour le déplacement d'un conteneur 16 de type LD3. Le banc 22 est quant à lui escamoté.

Les tapis roulants 20 sont ici dans leur position abaissée. Le brin supérieur de chacun de ces tapis se trouve en dessous du plan de roulement défini plus haut. Le conteneur 16 peut passer sans être gêné par les tapis roulants 20. Les tapis roulants 20 prennent également cette position lorsqu'ils supportent un mur de bagages 12. La construction de ces tapis roulants 20 leur permet de porter une charge importante et des appuis solides sur la structure primaire de l'aéronef sont prévus pour recevoir chaque tapis roulant 20 dans sa position abaissée.

Le banc 22 est ici escamoté pour ne pas gêner le passage du conteneur 16. Ce banc 22 n'est pas utile lors du chargement ou du déchargement des conteneurs 16. Il n'est donc pas gênant qu'il soit replié.

Pour une meilleure modularité de la soute, c'est-à-dire pour permettre à la soute d'accueillir un nombre variable de conteneurs 16 et d'adapter le volume pour recevoir des bagages 12, il est avantageux que la longueur d'un tapis roulant 20, ou plus précisément le pas entre deux tapis roulants 20, corresponde à la largeur d'un conteneur 16 adapté à la soute (la longueur du tapis roulant 20 et la largeur d'un conteneur 16 sont mesurées chacune dans le sens longitudinal de l'aéronef). Ainsi, lorsque plusieurs conteneurs 16 sont chargés à bord de la soute, les tapis roulants 20 se trouvant sous les conteneurs 16 restent en position abaissée et les autres tapis roulants 20 assurent le convoyage des bagages 12 jusqu'aux conteneurs 16.

De même, on prévoit de préférence plusieurs bancs 22 de chaque côté de la soute. Ici aussi, mesuré dans le sens longitudinal de l'aéronef, la longueur d'un banc 22 est un multiple de la largeur d'un conteneur 16. Avantageusement, un banc a une longueur correspondant au double de la largeur d'un conteneur 16. Ainsi, le déploiement et le pliage des bancs 22 est plus rapide à réaliser que pour des bancs dont la longueur correspond à la largeur d'un seul conteneur.

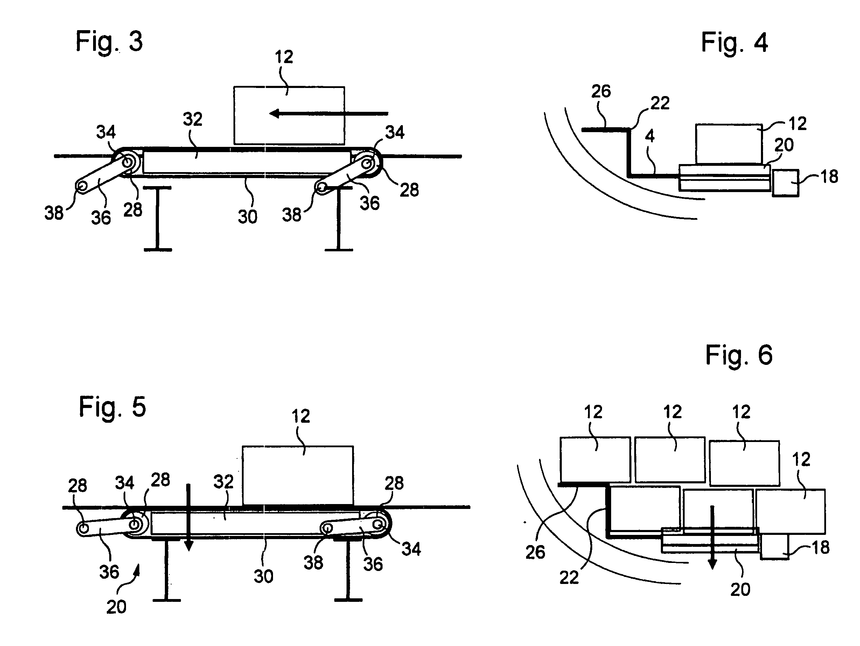

Les figures 3 à 6 illustrent le passage d'un tapis roulant 20 de sa position active (figures 3 et 4) à sa position escamotée (figures 5 et 6) ou inversement.

Sur ces figures, on aperçoit la structure d'un tapis roulant 20. Celui-ci comporte deux rouleaux d'extrémité 28 autour desquels prend place une bande sans fin 30. Une âme 32 est disposée à l'intérieur de la bande sans fin 30, entre les rouleaux d'extrémité 28, pour supporter la charge transportée tant lors d'un convoyage que lorsque le tapis roulant 20 est en position abaissée et porte plusieurs bagages. Le (ou les) moteur(s), non représentés sur les dessins, pour l'entraînement des rouleaux d'extrémité 28 peuvent être par exemple logés dans l'âme 32.

Chaque rouleaux d'extrémité 28 est monté autour d'un axe 34. Chaque axe 34 est porté par deux bras pivotants 36, un de chaque côté du rouleau d'extrémité 28. Les bras pivotants 36 correspondant à un même rouleau d'extrémité 28 sont montés sur un essieu 38 motorisé. Les bras pivotants 36 sont par exemple clavetés sur l'essieu 36 et lorsque l'essieu 36 est entraîné en rotation, les bras correspondants pivotent entraînant avec eux le rouleau d'extrémité 28 correspondant. L'altitude de ce dernier varie, permettant ainsi de faire passer un tapis roulant 20 d'une position active à une position escamotée, ou inversement.

Sur un même côté d'un tapis roulant 20, les deux bras pivotants 36 forment un parallélogramme lors du passage de la position escamotée à la position active, ou inversement. De la sorte, le tapis roulant 20 reste toujours sensiblement horizontal.

De manière générale, sauf pour le tapis roulant se trouvant à l'extrémité d'un ensemble de tapis roulants 20 du côté de la porte à bagages 10, les deux essieux 38 d'un même tapis roulant 20 peuvent être reliés et entraînés par un même moteur.

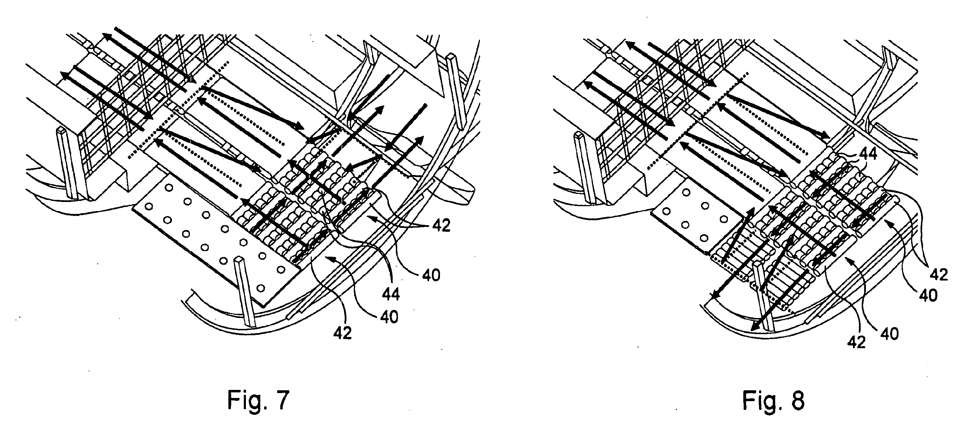

Comme illustré notamment sur les figures 7 et 8 qui illustrent le chargement et le déchargement de bagages 12, l'extrémité du tapis roulant 20 la plus proche de la porte à bagages 10 peut avantageusement se surélever par rapport aux autres tapis roulants se trouvant dans leur position active.

Sur la figure 7, des premières flèches montrent le cheminement de bagages lors du chargement de la soute tandis que des secondes flèches montrent le cheminement des bagages lors du déchargement de la soute.

On remarque sur les figures 7 et 8, à l'extrémité de chaque ensemble de tapis roulants 20, la présence d'un élément de convoyage 40 permettant de réaliser un déplacement d'un bagage dans deux directions perpendiculaires, une première direction correspondant à la direction longitudinale correspondant au déplacement d'un bagage se trouvant sur l'ensemble de tapis roulants 20 et la seconde direction étant une direction perpendiculaire correspondant à une direction transversale par rapport à l'aéronef.

Chaque élément de convoyage 40 présente des premiers rouleaux 42 permettant un déplacement longitudinal d'un bagage. Ces premiers rouleaux 42 s'étendent donc transversalement par rapport à la soute (ou à l'aéronef). Chaque élément de convoyage 40 présente également des seconds rouleaux 44 permettant un déplacement transversal d'un bagage. Ces seconds rouleaux 42 s'étendent donc longitudinalement par rapport à la soute. Ces divers rouleaux sont motorisés. En fonction de la direction de convoyage choisie, les premiers rouleaux 42 sont relevés ou rabaissés par rapport aux seconds rouleaux 44 qui sont par exemple fixes.

Lors du chargement de bagages dans la soute, les bagages arrivent avec un mouvement sensiblement transversal par rapport à l'aéronef par la porte à bagages 10 (figure 7) ou par la porte à conteneurs 14 (figure 8) pour ensuite être dirigés avec un mouvement longitudinal vers le fond de la soute de l'aéronef. De manière générale, juste avant d'effectuer un changement de direction, il faut surélever un tapis (ou autre moyen de convoyage). Ceci est représenté sur les figures 7 et 8 par une flèche associée à des lignes en pointillés. Ces dernières symbolisent un plan sensiblement horizontal tandis que la flèche en trait plein indique l'inclinaison vers le haut du tapis roulant 20 ou des moyens d'amenée des bagages.

Comme il ressort de la description qui précède, le dispositif de convoyage de bagages selon l'invention s'adapte aussi bien à une soute ne recevant que des bagages qu'à une soute destinée à recevoir à la fois des bagages et des conteneurs. Le dispositif selon l'invention peut s'adapter à de nombres configurations. Le nombre de conteneurs emportés dans la soute peut être variable. Le dispositif s'adapte alors parfaitement à l'espace disponible.

Le dispositif proposé évite au personnel chargé de placer les bagages de passagers dans la soute de l'aéronef de porter (ou lancer) les bagages vers le fond de la soute. Les bagages peuvent être acheminé par un tapis ou autre jusque dans la soute, où ils sont dirigés -automatiquement- sur les tapis roulants 20 vers le fond de la soute. Des opérateurs, au fond de la soute, réceptionnent les bagages et les empilent. Au fur et à mesure de l'avancée du chargement, des tapis roulants sont abaissés et arrêtés.

Le dispositif selon l'invention permet également de réaliser un gain de temps important pour le chargement et le déchargement des bagages.

Les tapis roulants proposés ici présentent un surpoids limité pour l'aéronef. De la sorte, la masse du dispositif ne pénalise pas trop lourdement la masse globale de l'aéronef.

Bien entendu, la présente invention ne se limite pas à la forme de réalisation préférée décrite ci-dessus à titre d'exemple non limitatif. Elle concerne également toutes les variantes de réalisation à la portée de l'homme du métier dans le cadre des revendications ci-après.

## Revendications

1. Dispositif de convoyage pour objets, notamment des bagages (12), dans une soute d'aéronef destinée à recevoir à la fois des conteneurs (16) et des bagages (12) et munie d'un système de chargement de fret présentant des rouleaux (18) définissant un plan de roulement sur lequel un conteneur (16) peut se déplacer en faisant rouler lesdits rouleaux (18),
comportant un ensemble de tapis roulants (20) disposés longitudinalement dans la soute l'un à la suite de l'autre de manière à s'étendre sur une partie au moins de la longueur de la soute,
chaque tapis roulant (20) comportant un brin supérieur destiné à recevoir un objet (12) pour le déplacer, **caractérisé en ce que**
chaque tapis est mobile entre une première position surélevée dans laquelle le brin supérieur dudit tapis se trouve au-dessus du plan de roulement défini par les rouleaux (18) du système de chargement de fret et une seconde position dans laquelle le brin supérieur dudit tapis se trouve au-dessous dudit plan de roulement.

2. Dispositif de convoyage pour objets selon la revendication 1, **caractérisé en ce qu'**il comporte deux ensembles de tapis roulants (20) disposés longitudinalement dans la soute l'un à la suite de l'autre de manière à s'étendre sur une partie au moins de la longueur de la soute, les deux ensembles étant disposés parallèlement en vis-à-vis, en étant séparés l'un de l'autre par des rouleaux (18) du système de chargement de fret.

3. Dispositif de convoyage pour objets selon l'une des revendications 1 ou 2, **caractérisé en ce que** les tapis roulants (20) d'un même ensemble sont d'une même longueur et disposés selon un pas prédéterminé.

4. Dispositif de convoyage pour objets selon l'une des revendications 1 à 3, **caractérisé en ce que** chaque tapis roulant (20) comporte une bande sans fin (30) montée autour de deux rouleaux d'extrémité (28), **en ce que** les deux rouleaux d'extrémité (28) sont parallèles et montés sur des bras pivotants (36) par rapport à la soute, chaque bras associé à un rouleau d'extrémité (28) formant avec un bras de l'autre rouleau d'extrémité (28) un parallélogramme.

5. Dispositif de convoyage pour objets selon l'une des revendications 1 à 4, **caractérisé en ce que** l'extrémité de chaque ensemble de tapis roulants (20) peut se surélever.

6. Dispositif de convoyage pour objets selon l'une des revendications 1 à 5, **caractérisé en ce qu'**il comporte en outre un système de chargement de fret.

7. Aéronef comportant une soute, **caractérisé en ce que** la soute est équipée d'un dispositif de convoyage pour objets selon l'une des revendications 1 à 6.

8. Aéronef selon la revendication 7, **caractérisé en ce que** la soute comporte au moins deux portes d'accès (10, 14) disposées chacune sensiblement à l'extrémité d'un ensemble de tapis roulants (20), **en ce qu'**une première porte (14) est de taille suffisante pour permettre l'introduction d'un conteneur (16) de taille normalisée dans la soute, et **en ce qu'**une seconde porte (10), de taille réduite par rapport à la première porte (14), est placée sur la paroi de la soute opposée à la paroi sur laquelle se trouve la première porte (14).

9. Aéronef selon la revendication 8, **caractérisé en ce qu'**entre les deux portes d'accès (10, 14), à l'extrémité d'au moins un ensemble de tapis roulants (20), la soute comporte un élément de convoyage (40) permettant de réaliser un déplacement d'un objet dans deux directions perpendiculaires, une première direction correspondant à la direction de déplacement d'un objet se trouvant sur l'ensemble de tapis roulants et la seconde direction étant une direction perpendiculaire correspondant à une direction transversale par rapport à l'aéronef.

## Claims

1. Conveyor device for objects, in particular luggage (12), in an aircraft hold intended to accommodate both containers (16) and luggage (12) and equipped with a cargo loading system having rollers (18) defining a rolling plane on which a container (16) can move by causing the said rollers (18) to roll, comprising a set of conveyor belts (20) arranged longitudinally in the hold one after the other so as to extend over at least part of the length of the hold, each conveyor belt (20) comprising an upper section intended to receive an object (12) in order to move it, **characterized in that** each belt can move between a first raised position in which the upper section of the said belt is located above the rolling plane defined by rollers (18) of the cargo loading system and a second position in which the upper section of the said belt is located below the said rolling plane.

2. Conveyor device for objects according to claim 1, **characterized in that** it comprises two sets of conveyor belts (20) arranged longitudinally in the hold one after the other so as to extend over at least part of the length of the hold, the two sets being arranged parallel opposite one another, and being separated from one another by rollers (18) of the cargo loading system.

3. Conveyor device for objects according to one of claims 1 or 2, **characterized in that** the conveyor belts (20) of the same set are of the same length and are distributed according to a predetermined pitch.

4. Conveyor device for objects according to one of claims 1 to 3, **characterized in that** each conveyor belt (20) comprises an endless belt (30) mounted around two end rollers (28), **in that** the two end rollers (28) are parallel and mounted on arms (36) pivoting in relation to the hold, each arm associated with an end roller (28) forming a parallelogram with an arm of the other end roller (28).

5. Conveyor device for objects according to one of claims 1 to 4, **characterized in** the end of the set of conveyor belts (20) can be raised.

6. Conveyor device for objects according to one of claims 1 to 5, **characterized in that** it further comprises a cargo loading system.

7. Aircraft comprising a hold, **characterized in that** the hold is equipped with a conveyor device for objects according to one of claims 1 to 6.

8. Aircraft according to claim 7, **characterized in that** the hold comprises at least two access doors (10, 14) each arranged substantially at the end of a set of conveyor belts (20), **in that** a first door (14) is of sufficient size to allow introduction of a container (16) of standardized size into the hold, and **in that** a second door (10), of smaller size in relation to the first door (14), is positioned on the opposite wall of the hold to the wall on which the first door (14) is located.

9. Aircraft according to claim 8, **characterized in that** between the two access doors (10, 14), at the end of at least one set of conveyor belts (20), the hold comprises a conveyor member (40) making it possible to carry out movement of an object in two perpendicular directions, a first direction corresponding to the direction of movement of an object located on the set of conveyor belts and the second direction being a perpendicular direction corresponding to a direction that is transverse in relation to the aircraft.

## Patentansprüche

1. Vorrichtung zur Förderung von Gegenständen, insbesondere Gepäckstücken (12), in einem Flugzeug-Frachtraum, der dazu bestimmt ist, gleichzeitig Container (16) und Gepäckstücke (12) aufzunehmen, und mit einem Frachtladesystem versehen ist, das Rollen (18) aufweist, die eine Rollebene definieren, auf der sich ein Container (16) bewegen kann, in dem er diese Rollen (18) rollen lässt, umfassend eine Gruppe von Förderbändern (20), die im Frachtraum in Längsrichtung hintereinander so angeordnet sind, dass sie sich über mindestens einen Teil der Länge des Frachtraums erstrecken, wobei jedes Förderband (20) ein Obertrum umfasst, das dazu bestimmt ist, einen Gegenstand (12) aufzunehmen, um ihn zu bewegen, **dadurch gekennzeichnet, dass**
jedes Förderband zwischen einer ersten angehobenen Stellung, in der das Obertrum des Förderbands sich oberhalb der von den Rollen (18) des Frachtladesystems definierten Rollebene befindet, und einer zweiten Stellung beweglich ist, in der das Obertrum des Förderbands sich unterhalb dieser Rollebene befindet.

2. Vorrichtung zur Förderung von Gegenständen nach Anspruch 1, **dadurch gekennzeichnet, dass** sie zwei Gruppen von Förderbändern (20) umfasst, die im Frachtraum in Längsrichtung hintereinander so angeordnet sind, dass sie sich über mindestens einen Teil der Länge des Frachtraums erstrecken, wobei die beiden Gruppen parallel einander gegenüber angeordnet sind, indem sie voneinander durch Rollen (18) des Frachtladesystems getrennt sind.

3. Vorrichtung zur Förderung von Gegenständen nach einem der Ansprüche 1 oder 2, **dadurch gekennzeichnet, dass** die Förderbänder (20) ein und derselben Gruppe von gleicher Länge und in einem vorbestimmten Schritt angeordnet sind.

4. Vorrichtung zur Förderung von Gegenständen nach einem der Ansprüche 1 bis 3, **dadurch gekennzeichnet, dass** jedes Förderband (20) ein Endlosband (30) umfasst, das um zwei Endrollen (28) montiert ist, dass die beiden Endrollen (28) parallel und auf bezüglich des Frachtraums verschwenkbaren Armen (36) montiert sind, wobei jeder einer Endrolle (28) zugeordnete Arm mit einem Arm der anderen Endrolle (28) ein Parallelogramm bildet.

5. Vorrichtung zur Förderung von Gegenständen nach einem der Ansprüche 1 bis 4, **dadurch gekennzeichnet, dass** das Ende jeder Gruppe von Förderbändern (20) angehoben werden kann.

6. Vorrichtung zur Förderung von Gegenständen nach einem der Ansprüche 1 bis 5, **dadurch gekennzeichnet, dass** sie außerdern ein Frachtladesystem umfasst.

7. Flugzeug, umfassend einen Frachtraum, **dadurch gekennzeichnet, dass** der Frachtraum mit einer Vorrichtung zur Förderung von Gegenständen nach einem der Ansprüche 1 bis 6 ausgerüstet ist.

8. Flugzeug nach Anspruch 7, **dadurch gekennzeichnet, dass** der Frachtraum mindestens zwei Zugangstüren (10, 14) umfasst, die jeweils im Wesentlichen am Ende einer Gruppe von Förderbändern (20) angeordnet sind, dass eine erste Tür (14) von solcher Größe ist, dass sie die Einführung eines Containers (16) mit Standardgröße in den Frachtraum gestattet, und dass eine zweite Tür (10) von kleinerer Größe als die erste Tür (14) in der Wand des Frachtraums angeordnet ist, die der Wand, in der sich die erste Tür [14) befindet, gegenüberliegt.

9. Flugzeug nach Ansporuch 8, **dadurch gekennzeichnet, dass** der Frachtraum zwischen den beiden Zugangstüren (10, 14) am Ende mindestens einer Gruppe von Förderbändern (20) ein Förderelement (40) umfasst, das es gestattet, eine Bewegung eines Gegenstands in zwei zueinander senkrechten Richtungen vorzunehmen, wobei eine erste Richtung der Bewegungsrichtung eines sich auf der Förderbandgruppe befindenden Gegenstands entspricht und die zweite Richtung eine hierzu senkrechte Richtung ist, die einer Querrichtung bezüglich des Flugzeugs entspricht.
